# EUROPEAN PATENT APPLICATION

(11) **EP 1 005 979 A2**
(43) Date of publication of application: **07.06.2000**
(21) Application number: 99200113.1
(22) Date of filing: 15.01.1999
(51) Int. Cl.: B32B 31/20, B32B 5/02

(54) **Method for manufacturing a dimensionally stable fabric cloth and fabric cloth obtained therewith**

(30) Priority: 02.12.1998 NL 1010706
(71) Applicant: Ten Cate Advanced Composites B.V., 7443 PV Nijverdal (NL)
(72) Inventor: Lenferink, Robertus Gerardus, 7651 RJ Tubbergen (NL); Van Dreumel, Wilhelmus Hendrikus Maria, 7441 JD Nijverdal (NL)
(74) Representative: Schumann, Bernard Herman Johan

(57) **Abstract**

The invention relates to a method for manufacturing a dimensionally stable fabric cloth comprising a layer consisting of a fabric of fibres with tensile strength, for instance of aramid, glass or carbon, which method comprises the following steps of:
providing said fabric (1) of fibres with tensile strength in the form of a fabric strip;
providing a foil strip (6) of thermoplastic plastic foil which melts when the temperature is increased and which can adhere in melted state to said fabric;
heating the fabric strip during transport thereof;
subsequently joining together under a certain pressure the heated fabric strip (1) and the foil strip (6) supplied at the same speed, such that the foil melts through being heated by the fabric and adheres to the fabric; and
cooling the thus obtained fabric cloth shortly thereafter such that restructuring and reinstallation of the plastic foil material is prevented.

## Description

In the production of laminates based for instance on PPS (polyphenylene sulphide), a so-called film-stacking method is taken as starting point. The composite layers of fabric are herein cut to size and stacked in alternation with PPS foils. During the manipulation of dry fabric filament breakage often occurs, frayed edges are created and the weave structure is disturbed.

In respect of the foregoing it is an object of the invention to obviate said drawbacks of the prior art.

In this respect the invention provides a method for manufacturing a dimensionally stable fabric cloth comprising a layer consisting of a fabric of fibres with tensile strength, for instance of aramid, glass or carbon, which method comprises the following steps of:
providing said fabric of fibres with tensile strength in the form of a fabric strip;
providing a foil strip of thermoplastic plastic foil which melts when the temperature is increased and which can adhere in melted state to said fabric;
heating the fabric strip during transport thereof;
subsequently joining together under a certain pressure the heated fabric strip and the foil strip supplied at the same speed, such that the foil melts through being heated by the fabric and adheres to the fabric; and
cooling the thus obtained fabric cloth shortly thereafter such that restructuring and reinstallation of the plastic foil material is prevented.

The obtained fabric cloth is stabilized with the method according to the invention and can then be subjected to follow-on processes, for instance the manufacture of laminates consisting of a number of layers of stabilized fabric cloth. By arranging the plastic foil on the dry fabric while heating, a certain impregnation of the fabric is obtained, whereby the internal processability is considerably improved and the danger of damage during handling is drastically reduced. As side-effect is created the possibility of manufacturing larger, optionally curved laminates outside the press. Owing to the low viscosity of the above mentioned PPS in the melted state, the matrix can easily penetrate between the filaments at slight pressure from the layer lying on the surface of the fabric, and a good impregnation can thus be effected.

For the arranging of foil on fabric use is made of calender techniques. The fabric together with the foil is herein brought to temperature under pressure in for instance a double-belt press. Existing equipment is however not suitable for the high temperature at which PPS melts. It is moreover undesirable that PPS be subjected to a higher temperature for a longer period in an oxygen-containing atmosphere.

Said slight pressure can be exerted very simply with a method wherein the pressure is created during the joining together by guiding the fabric respectively the warm fabric cloth under tensile stress through a certain contact angle round a guide roller. The plastic material, in particular PPS, is heated according to the method of the invention by the fabric itself, which is for instance preheated by infrared radiation.

Immediately after the fabric strip leaves the infrared station, the foil is pressed against the hot fabric, whereby melting of the plastic occurs and impregnation is effectively performed, whereafter rapid cooling takes place. This rapid cooling can for instance take place with a method wherein cooling of the fabric cloth takes place by guiding the fabric cloth under tensile stress through a certain contact angle round a cooling roller. Alternatively, a method can be applied wherein cooling of the fabric cloth takes place with a cooling air flow.

If slow cooling were to be used, large crystals with a high degree of packing would then result in the cooled plastic material or the matrix. Shrinkage hereby occurs and results in fabric folds. The balance between machine speed, fabric temperature, contact time in hot state and cooling time must be determined in a manner such that a manageable and reproducible production process is obtained.

Attention is drawn to the fact that the invention is not limited to impregnation of the fabric strip with a foil strip from one side. A double-sided embodiment may also offer advantages.

The use of PPS has already been discussed. Use can generally be made of a semi-crystalline polymer. Fundamental to the invention is the rapid cooling whereby said effective crystallization is essentially prevented. Another way of expressing this is that the cooling takes place so rapidly that the material will not restructure. The material is as it were frozen. In terms of metal working, a technically related process is designated as quenching. In a preferred embodiment the quenching will be effected by guiding the still warm fabric cloth or semi-preg over a cooling roller. The temperature of the semi-preg or quasi-preg after cooling must be so low that no, or at least negligible crystallization takes place. In practice this is found to be a temperature below 100°C.

The invention will now be elucidated with reference to the annexed drawings. Herein:

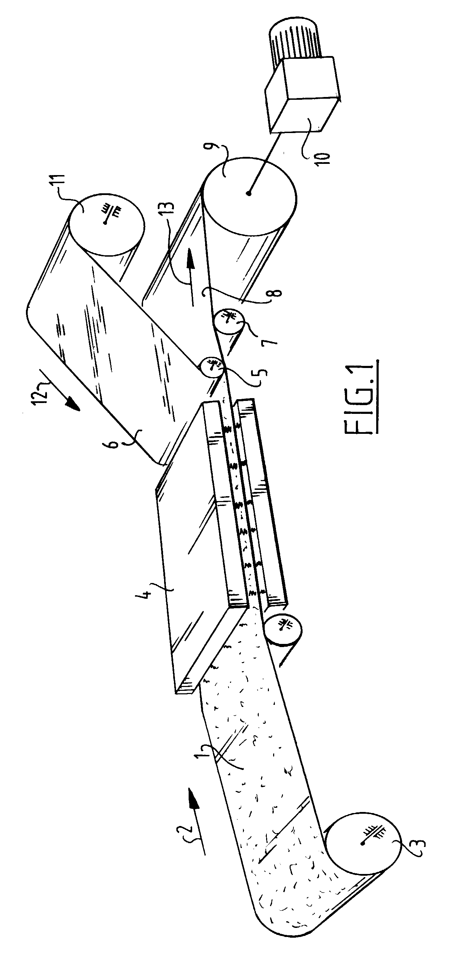

figure 1 shows a highly schematic perspective view of a device for manufacturing a dimensionally stable fabric cloth according to the invention;
figure 2 shows a variant;
figure 3 shows a number of fabric cloths according to the invention which are placed one on top of another and processed into a laminate and have a cutting contour therein;
figure 4 shows a mould into which the cut-out laminate of figure 3 is placed under pressure and heat in order to form the nose cone of an aircraft;
figure 5 shows a graph explaining the thermal behaviour of an amorphous polymer; and
figure 6 shows a graph elucidating the thermal behaviour of a semi-crystalline polymer.

A strip 1 consisting of a textile fabric is transported as according to arrow 2 from a supply roll 3 to and through a heating station 4 based on heating by infrared radiation. Promptly after leaving heating station 4 the heated fabric strip 1 is guided at a certain angle over a deflecting roller 5 while being joined together with a non-preheated strip 6 consisting of PPS foil. Owing to the heat still present in the fabric the PPS will melt and impregnate the fabric. Deflection through a certain angle over a cooling roller 7 takes place shortly thereafter. The cooling from for instance 250°C to below 100°C takes place so rapidly that restructuring and crystallization of the PPS material is effectively prevented. The cooled fabric cloth 8 is wound onto a roll 9 which is driven by a drive 10. The supply roll of PPS is designated with 11, the transport direction of the PPS foil with the reference numeral 12, while the transport of the cooled fabric cloth is designated with 13.

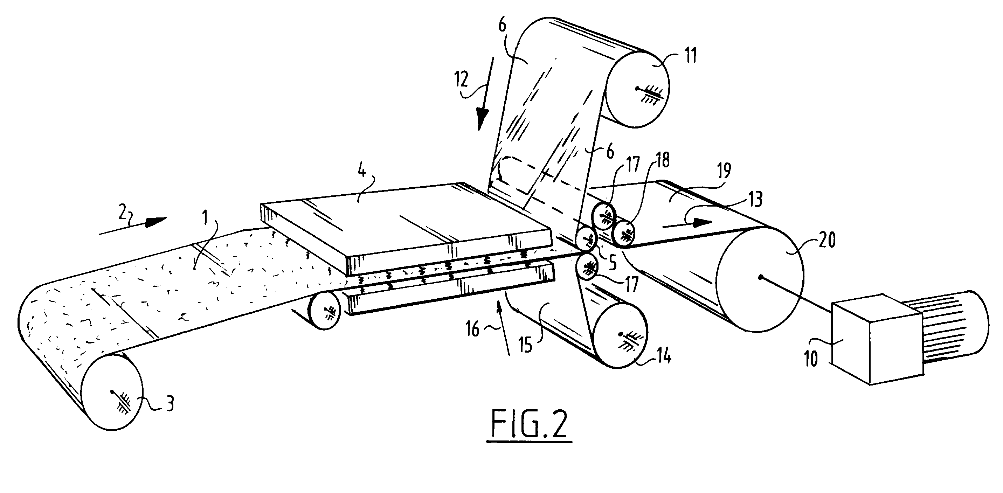

Figure 2 shows an embodiment in which the fabric is impregnated from two sides by PPS-foil material. A second supply roll of PPS foil is designated with the reference numeral 14, the relevant PPS-foil strip with 15 and the transport direction with 16. In this embodiment the roller 5 co-acts with a roller 17 to form a pinch with light pressure. Fusing and impregnation take place in the pinch, followed by cooling with two cooling rollers respectively 17 and 18 over which the still warm pre-preg is guided for a rapid cooling to below about 100°C, this so rapidly and to such a low temperature that restructuring of the PPS material is precluded. The strip of cooled pre-preg is designated with 19. Winding up takes place on a supply roll 20 driven by drive 10.

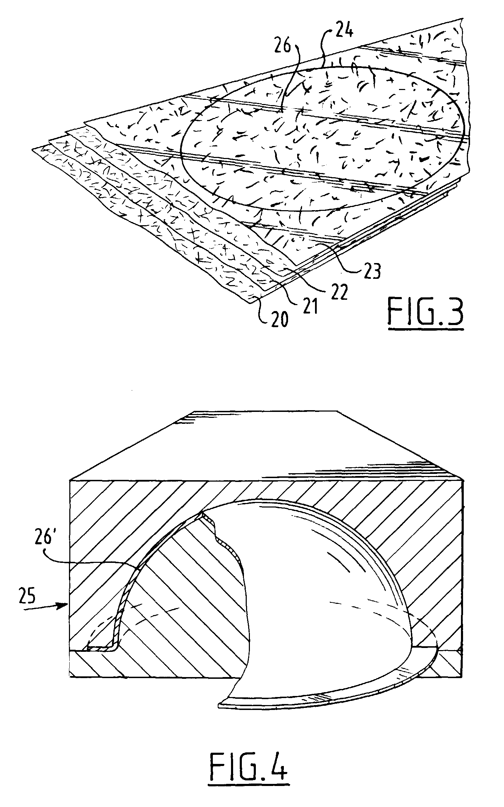

Figure 3 shows very schematically a number of layers of pre-preg designated respectively 20, 21, 22, 23. By means of for instance a punching process the round shape designated symbolically with contour 24 can be cut from this laminate realized by gentle heating and for instance a light pressure.

Figure 4 shows very schematically a mould 25 which in closed form bounds a mould cavity into which the round laminate 26 of figure 3 can be placed while being heated and under a certain pressure so as to obtain the shape designated with 26'. After cooling and removing from mould 25 the obtained dome is cured and is suitable as for instance nose cone of an aircraft.

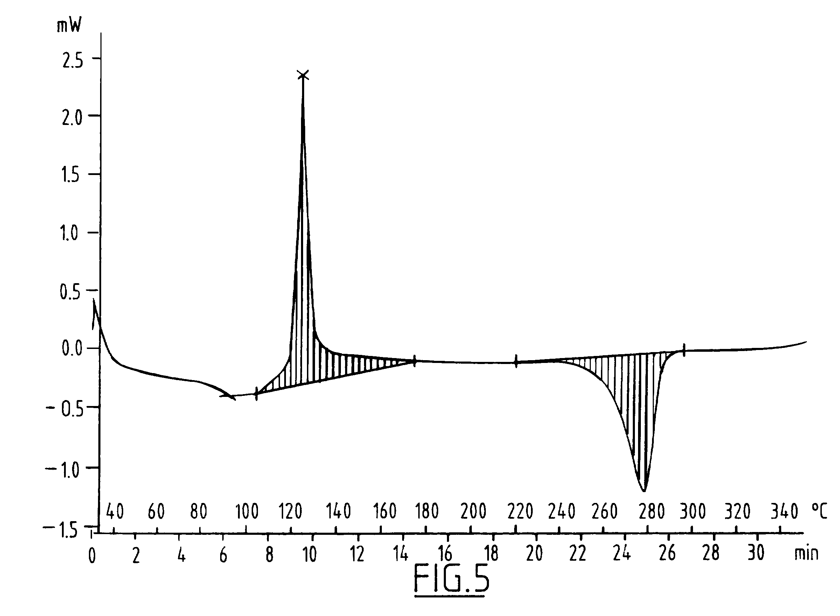

Figure 5 shows a test result obtained with an amorphous polymer. The amorphous material is heated according to this graph from 30°C to 350°C. At about 120°C the material begins to crystallize and a more compact structure is obtained. At 280°C the material will melt completely and the existing solid structure, which is a crystal structure, is broken up.

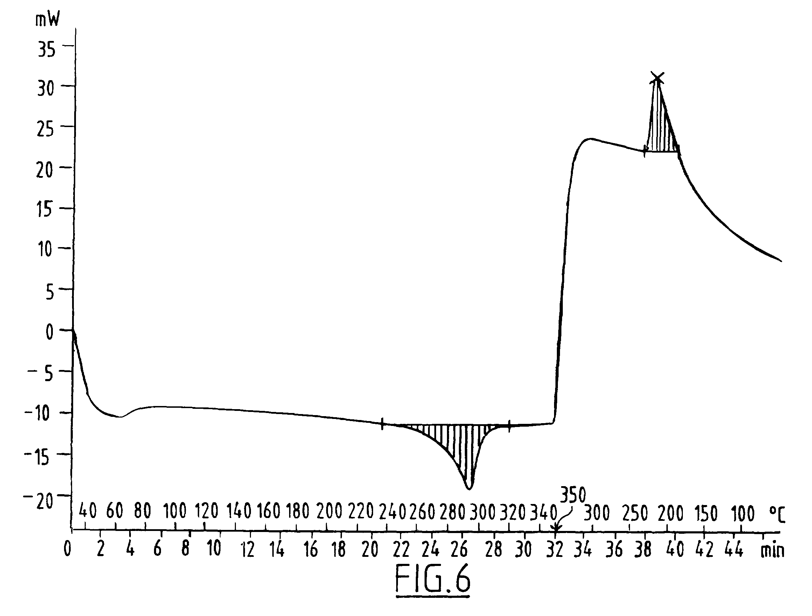

Figure 6 shows the behaviour of a semi-crystalline polymer during respectively heating to about 350°C followed by cooling.

The semi-crystalline polymer material is heated from 30°C to 350°C at a heating-up rate of about 10°C per minute. Immediately thereafter the material is cooled to 50°C at a cooling rate of 20°C per minute. During the heating phase no recrystallization takes place. The material already possesses a maximum crystallinity. The material melts completely at about 280°C; the existing solid structure, the crystal structure, is broken up. During the cooling phase the material will begin to recrystallize at a temperature of about 230°C. The recrystallization takes place in a very short time. The graph shows clearly the relevant recrystallization peak.

## Claims

1. Method for manufacturing a dimensionally stable fabric cloth comprising a layer consisting of a fabric of fibres with tensile strength, for instance of aramid, glass or carbon, which method comprises the following steps of:
providing said fabric of fibres with tensile strength in the form of a fabric strip;
providing a foil strip of thermoplastic plastic foil which melts when the temperature is increased and which can adhere in melted state to said fabric;
heating the fabric strip during transport thereof;
subsequently joining together under a certain pressure the heated fabric strip and the foil strip supplied at the same speed, such that the foil melts through being heated by the fabric and adheres to the fabric; and
cooling the thus obtained fabric cloth shortly thereafter such that restructuring and reinstallation of the plastic foil material is prevented.

2. Method as claimed in claim 1, wherein the pressure is created during the joining together by guiding the fabric respectively the warm fabric cloth under tensile stress through a certain contact angle round a guide roller.

3. Method as claimed in claim 1, wherein cooling of the fabric cloth takes place by guiding the fabric cloth under tensile stress through a certain contact angle round a cooling roller.

4. Method as claimed in claim 1, wherein cooling of the fabric cloth takes place with a cooling air flow.

5. Method as claimed in claim 1, wherein heating of the fabric strip takes place with infrared radiation.

6. Method as claimed in claim 1, wherein the foil consists of a semi-crystalline polymer, for instance PPS (polyphenylene sulphide).

7. Method as claimed in claim 1, wherein cooling takes place to a temperature below 100°C.

8. Fabric cloth obtained by applying a method as claimed in any of the foregoing claims, and comprising a layer consisting of a fabric of fibres with tensile strength and a layer of plastic foil material adhered thereto.
